# EUROPÄISCHE PATENTSCHRIFT

(11) **EP 1 141 618 B1**
(45) Veröffentlichungstag und Bekanntmachung des Hinweises auf die Patenterteilung: **25.06.2003**
(21) Anmeldenummer: 99967863.4
(22) Anmeldetag: 02.12.1999
(51) Int. Cl.: F17C 11/00, C01B 3/00

(54) **VORRICHTUNG ZUM SPEICHERN VON DRUCKGAS**
DEVICE FOR STORING COMPRESSED GAS
DISPOSITIF DE STOCKAGE DE GAZ COMPRIME

(30) Priorität: 15.12.1998 DE 19859654
(43) Veröffentlichungstag der Anmeldung: 10.10.2001
(73) Patentinhaber: MANNESMANN Aktiengesellschaft, 40213 Düsseldorf (DE)
(72) Erfinder: KLOS, Holger Dr., D-76185 Karlsruhe (DE); SCHÜTZ, Walter Dr., D-95466 Weidenberg (DE)
(74) Vertreter: Müller, Thomas, Dipl.-Ing.
(86) Internationale Anmeldenummer: DE9903916
(87) Internationale Veröffentlichungsnummer: WO00039499

(56) Entgegenhaltungen:
- WO-A-96/41745
- WO-A-97/26082
- DE-A- 3 924 776
- DE-A- 19 703 749

## Beschreibung

Die vorliegende Erfindung betrifft eine Vorrichtung zum Speichern von Druckgas, insbesondere von Wasserstoff, mit wenigstens einem geschlossenen Speicherbehälter, der mindestens eine Zu- und Ableitung für das Druckgas und in seinem Innenraum ein Gasführungssystem aufweist, wobei das Gasführungssystem mit der Zu- und Ableitung für das Druckgas verbunden ist, und bei dem im Innenraum eine Feststofföllung zum Speichern des Druckgases vorgesehen ist.

Insbesondere die Speicherung von Wasserstoff in normalen Druckbehältern bereitet große Schwierigkeiten, wenn bezogen auf das Behältervolumen eine möglichst große Fülldichte erzielt werden soll.

Aus der EP-A-0 319 458 ist allgemein bekannt, daß eine wie eingangs beschriebene Vorrichtung zum Speichern von Druckgas, in der Hydrid bildende Metallegierungen in feinteiliger Form eingefüllt sind, eine auf das Volumen bezogen hohe Speicherkapazität besitzt. Dieser Speicher hat jedoch erhebliche Nachteile, insbesondere wegen seines hohen Gesamtgewichts.

In jüngerer Zeit sind Vorschläge bekannt geworden, zur Speicherung von Gasen, insbesondere von Wasserstoff, sogenannte Carbon-Nanostrukturen zu verwenden. Ein solcher Vorschlag ist der WO 97/26082 entnehmbar. Im Hinblick auf die technische Gestaltung einer Speichervorrichtung ist lediglich ausgeführt, daß ein Speicherbehälter mit einem Wasserstoffspeicherbett versehen ist. Angaben über die Einfülldichte des Nanostrukturmaterials werden nicht gemacht.

Bei vielen Anwendungen, in denen gespeicherter Wasserstoff verwendet werden soll, kommt es darauf an, bei einem möglichst kleinen Speichervolumen und kleinem Speichergewicht der Speichervorrichtung eine möglichst große Gasmenge einspeichern zu können (möglichst hohe spezifische Speicherkapazität). Diese Forderung gilt insbesondere für mobile Anwendungen, also etwa bei Wasserstofftanks für Fahrzeuge, die mit Brennstoffzellen betrieben werden. Daher besteht ein Bedarf, die bisher erreichbare Speicherkapazität von Speichervorrichtungen für Druckgase, insbesondere Wasserstoff, weiter zu erhöhen.

Aus der WO 96/41745 ist es bekannt, Aktivkohlefasem, deren Faserdicke im Bereich von 0,1 bis 100 µm liegt, in paralleler Anordnung zueinander in einen zylindrischen Behälter aus Polypropylen zu füllen, der unter Erwärmung einem äußeren Druck zwischen 69 bar und 2758 bar ausgesetzt und unter Beibehaltung dieses Drucks anschließend abgekühlt wird. Hierdurch soll das zwischen den einzelnen Fasern liegende Volumen auf einen Anteil im Bereich von 5 bis 25% reduziert werden. Das auf diese Weise erzeugte Material wird beispielsweise verwendet zur Herstellung von elektrischen Kondensatoren, kann aber auch zur kompakten Speicherung von Erdgas, Methan, Ammoniak oder Wasserstoff verwendet werden. Aus dieser Schrift ergeben sich weder Hinweise auf eine zweckmäßige konstruktive Gestaltung eines Druckgasspeichers, noch auf Möglichkeiten zur Messung des Füllstands eines solchen Druckgasbehälters.

Weiterhin ist es insbesondere bei der Verwendung von Speichervorrichtungen als Treibstofftanks zwingend erforderlich, den aktuellen Füllstand der Speichervorrichtung mit Druckgas auf einfache, kostengünstige und dennoch genaue Weise bestimmen zu können. Üblicherweise erfolgt die Bestimmung der Befüllung mobiler Gastanks über die Bestimmung des Gewichts des Gastanks. Bei Flüssiggastanks ist es auch möglich, an der Außenwand des Gastanks einen in Längsrichtung des Gastanks linienartig befestigten Meßstreifen vorzusehen, der auf Temperaturänderungen im Bereich des Flüssigkeitsspiegels im Gastank infolge der Entstehung von Verdunstungskälte bei der Gasentnahme reagiert und so den aktuellen Füllstand näherungsweise optisch sichtbar macht.

Ausgehend vom genannten Stand der Technik liegt der Erfindung die Aufgabe zu Grunde, eine Vorrichtung zum Speichern von Druckgas, d.h. von nicht verflüssigtem Gas, insbesondere Wasserstoff, bereitzustellen, bei der die im Stand der Technik beschriebenen Nachteile vermieden werden. Insbesondere soll eine Vorrichtung der eingangs genannten Art derart weitergebildet werden, daß deren spezifische Speicherkapazität deutlich erhöht wird und gleichzeitig auch eine genaue Bestimmung der aktuellen Füllmenge des Speicherbehälters möglich ist.

Gelöst wird diese Aufgabe durch eine Vorrichtung zum Speichern von Druckgas der eingangs genannten Art, die erfindungsgemäß dadurch gekennzeichnet ist, daß die Feststoffüllung eine Füllung aus Carbon-Nanostrukturen ist, daß die Carbon-Nanostrukturen zu größeren zusammenhängenden Konglomeraten verbunden sind und daß wenigstens eine Vorrichtung zum Messen des Füllstands des Druckgases im Speicherbehälter vorgesehen ist.

Der Grundgedanke der vorliegenden Erfindung ist unter anderem darin zu sehen, daß durch die aus Carbon-Nanostrukturen bestehende Feststoffüllung im Speicherbehälter eine Erhöhung der Speicherkapazität für das Druckgas erzeugt wird, indem durch die Bildung zusammenhängender Konglomerate in das vorgegebene Speichervolumen des Speicherbehälters mehr Nanostrukturmaterial eingebracht werden kann, als dies bisher durch einfaches Einfüllen der ursprünglich hergestellten Carbonteilchen mit Nanostruktur möglich war. Die Konglomerate besitzen zumindest teilweise eine deutlich höhere Dichte (Scheindichte) als eine lose Schüttung des Nanostrukturmaterials. Die erfindungsgemäße Speichervorrichtung ist sowohl für stationäre als auch für mobile Anwendungen einsetzbar. Insbesondere eignet sich die erfindungsgemäße Vorrichtung für die Speicherung von gasförmigen Treibstoffen, wie beispielsweise Wasserstoff oder dergleichen.

Weiterhin wird durch die Vorrichtung zum Messen des Füllstands eine Möglichkeit geschaffen, den Füllstand des gespeicherten Mediums messen zu können. Die gemessenen Füllstandswerte können über geeignete Anzeigemittel dargestellt werden, so daß ein Benutzer rechtzeitig die Information erhält, wann der Speicherbehälter mit Druckgas nachgefüllt werden muß.

Bevorzugte Ausführungsformen der Speichervorrichtung ergeben sich aus den Unteransprüchen.

Vorteilhaft können zwei oder mehr Speicherbehälter vorgesehen sein. Dabei kann die Anzahl der verwendeten Speicherbehälter je nach Anwendungsfall und Bedarf beliebig variiert werden. Die einzelnen Speicherbehälter können vorteilhaft untereinander verbunden sein, so daß nur eine einzige Zu- bzw. Ableitung für die gesamte Speichervorrichtung erforderlich ist.

Vorzugsweise kann der Speicherbehälter als Druckbehälter, insbesondere als Druckbehälter zum Speichern von Gasen mit einem Druck von kleiner oder gleich 150 bar ausgebildet sein. Dabei ist die Erfindung auf keine bestimmten Behältergeometrien oder Behältermaterialien beschränkt.

Der Speicherbehälter kann beispielsweise eine im wesentlichen zylindrische Form aufweisen. Eine solche Form ist besonders geeignet, um Druckgase mit hohen Drücken zu speichern. Allerdings sind auch andere Behältergeometrien möglich. Insbesondere bei Verwendung der Speichervorrichtung als Treibstofftank für Fahrzeuge ist es nicht immer möglich - auf Grund der im Fahrzeug zur Verfügung stehenden Einbauräume - eine zylindrische Behälterform zu verwenden. Deshalb kann der Speicherbehälter beispielsweise auch im Querschnitt ovalförmig, flach oder in Form eines Speicherkissens ausgebildet sein. Der Innenraum des Speicherbehälters kann beispielsweise, jedoch nicht ausschließlich, einen kreisförmigen Querschnitt aufweisen.

Der Speicherbehälter kann einteilig oder mehrteilig und/oder einwandig oder mehrwandig ausgebildet sein. Eine bestimmte Ausgestaltungsform des Behälters kann je nach-Bedarf und Anwendungsfall individuell ausgewählt werden.

Als Behältermaterialien können beispielsweise geeignete Metalle verwendet werden. Es ist aber auch denkbar, den Speicherbehälter aus Kunststoff, der insbesondere faserverstärkt sein kann, herzustellen. Die Erfindung ist nicht auf besondere Speicherbehältermaterialien beschränkt. Wichtig ist lediglich, daß der Speicherbehälter insgesamt geeignet ist, Druckgas mit einem Betriebsdruck von vorzugsweise bis zu 150 bar zu speichern.

In weiterer Ausgestaltung kann jeweils eine separate Zuleitung und Ableitung für das Druckgas vorgesehen sein. Eine solche Ausgestaltung kann den Belade- und Entladevorgang des Speicherbehälters oder der Speicherbehälter beschleunigen.

Vorzugsweise ist in der Zuleitung und/oder der Ableitung für das Druckgas wenigstens ein Filterelement, vorzugsweise ein Mikrofilter, vorgesehen. Durch einen solchen Filter wird das unerwünschte Austragen von Partikeln der Feststoffüllung aus dem Speicherbehälter reduziert. Derartige Mikrofilter bestehen vorzugsweise aus wasserstoffresistenten Materialien, beispielsweise aus gasoffenen anorganischen oder organischen Polymerfolien, Keramikmaterialien, inerten gasoffenen gesinterten Stählen oder dergleichen.

In weiterer Ausgestaltung kann eine Heiz-/Kühleinrichtung für den Innenraum des Speicherbehälters und/oder die im Innenraum befindliche Feststoffüllung und/oder das gespeicherte Druckgas vorgesehen sein. Durch eine solche Heiz-/Kühleinrichtung kann im Speicherbehälter die für die Absorption beim Speichern und die Desorption beim Entladen des Druckgases in den Carbon-Nanostrukturen optimale Temperatur eingestellt werden.

Die Heiz-/Kühleinrichtung kann vorteilhaft einen in der Wand des Speicherbehälters ausgebildeten Einlaßstutzen und/oder Auslaßstutzen für ein Heiz-/Kühlmedium aufweisen. Dabei kann wenigstens zum Wärmeaustausch ein Kanal oder eine Leitung für das Heiz-/Kühlmedium vorgesehen sein, wobei der Kanal oder die Leitung mit dem Einlaßstutzen und/oder dem Auslaßstutzen verbunden ist. Über eine derart ausgebildete Heiz-/Kühleinrichtung kann mittels eines geeigneten Heiz-/Kühlmediums, beispielsweise ein Gas oder eine Flüssigkeit wie Wasser oder dergleichen Wärme oder Kälte in den Speicherbehälter eingespeist werden. Eine besondere Ausgestaltung des Kanals oder der Leitung ist nicht erforderlich. So können der Kanal oder die Leitung beispielsweise als offene oder geschlossene Systeme wie Nuten, Rohre oder dergleichen ausgebildet sein. Weiterhin ist es möglich, daß der Kanal oder die Leitung im Bereich der Behälterwand des Speicherbehälters ausgebildet ist. In einem solchen Fall kann beispielsweise, wenn der Speicherbehälter mehrwandig ausgebildet ist, der wenigstens eine Kanal oder die Leitung zwischen der Behälter-Außenwand und der Behälter-Innenwand im Sinne eines Heiz-/Kühlmantels ausgebildet sein. Dadurch kommt das durch den Kanal oder die Leitung strömende Heiz-/Kühlmedium nicht mit den im Innenraum des Speicherbehälters befindlichen Carbon-Nanostrukturen in Berührung. Es ist aber auch denkbar, daß sich der wenigstens eine Kanal oder die Leitung der Heiz-/Kühleinrichtung durch die Feststoffüllung hindurch erstreckt. Dabei kann der Kanal oder die Leitung beispielsweise eine sternförmige, spiralförmige oder jede andere beliebige Konfiguration aufweisen. Die Erfindung ist nicht auf bestimmte Ausgestaltungsformen des Kanals oder der Leitung beschränkt. Grundsätzlich ist auch ein direkter Wärmetausch möglich, insbesondere wenn als Heiz/Kühlmedium ein gleichartiges Gas wie das gespeicherte Gas eingesetzt wird, wie dies weiter unten noch erläutert wird.

Vorzugsweise kann wenigstens ein Temperatursensor zur Messung der im Innenraum des Speicherbehälters herrschenden Temperatur vorgesehen sein, der zweckmäßig innerhalb der Feststoffüllung angeordnet wird, aber auch in einem nicht vom Nanostrukturmaterial ausgefüllten Hohlraum untergebracht sein kann.

In weiterer Ausgestaltung ist die Feststoffüllung aus einer Anzahl von einzelnen Konglomeraten aus Carbon-Nanostrukturen gebildet. Die einzelnen Konglomerate können auf diese Weise zunächst unabhängig voneinander hergestellt und anschließend zu einem fertigen Speichersystem zusammengesetzt werden.

Vorteilhaft sind zumindest einzelne Konglomerate mit gegenüber der Scheindichte der ursprünglich losen Carbon-Nanostrukturen erhöhter Scheindichte verdichtet. Auf diese Weise kann bei vergleichsweise kleinem Speichervolumen des Speicherbehälters eine große Menge an Druckgas gespeichert werden, da in das vorgegebene Speichervolumen des Speicherbehälters mehr Speichermasse eingebracht wird, als dies durch einfaches Einfüllen von Speichermasse möglich wäre. Als Scheindichte wird dabei das auf das Volumen des Konglomerats bezogene Gewicht verstanden. Vorteilhaft kann die Scheindichte der aus den ursprünglich losen Teilchen des Carbon-Nanostrukturmaterials hergestellten Konglomerate mindestens auf das 1,5-fache, vorzugsweise mindestens auf das 2-fache der ursprünglichen Scheindichte erhöht werden. Üblicherweise liegt die ursprüngliche Scheindichte bei etwa 1,0 g/cm³, so daß die anzustrebenden Werte bei der Verdichtung vorzugsweise bei Mindestdichten von 1,5 bzw. 2,0 g/cm³ liegen.

Überraschenderweise bleibt die auf das Gewicht des Carbon-Nanostrukturmaterials bezogene Speicherkapazität trotz der erfolgten Verdichtung weitestgehend erhalten. Dies führt dazu, daß sich die Speicherkapazität bezogen auf das Volumen der erfindungsgemäß ausgeführten Speichervorrichtung im wesentlichen entsprechend dem Anstieg der Scheindichte der Konglomerate erhöht.

Durch eine Verdichtung der Carbon-Nanostrukturen ist noch ein wesentlicher Vorteil verbunden. Dieser besteht darin, daß die einzelnen Teilchen zwangsläufig zusammengehalten werden, so daß damit beim Entladen des Speicherbehälters einem unerwünschten Austragen von kleinsten Partikeln mit dem entnommenen Gasstrom entgegengewirkt wird. Das Entweichen von Partikeln in nachgeschaltete Aggregate oder die Umwelt könnte nämlich unter Umständen zu technischen Problemen führen oder gegen Emmissionsvorschriften bzgl. Kleinstpartikel verstoßen.

Vorteilhaft sind die Carbon-Nanostrukturen aus Nanofasem (nanofibres) und/oder Nanoröhrchen (nanotubes) und/oder Nanoschuppen (nanoshells) ausgebildet. Bevorzugt sind die Carbon-Nanostrukturen jedoch als Nanofasem ausgebildet. Im folgenden wird insbesondere auf diese Ausgestaltungsform eingegangen. Jedoch ist die Erfindung nicht auf die Ausgestaltung der Carbon-Nanostrukturen als Nanofasern beschränkt.

In weiterer Ausgestaltung können die Carbon-Nanostrukturen eine gerichtete Struktur aufweisen.

In bevorzugter Ausgestaltung sind die Carbon-Nanostrukturen helixförmig ausgebildet. Diese helixförmige Struktur kann beispielhaft mit der Form einer "Wendeltreppe" beschrieben werden. Die helixförmigen Carbon-Nanofasern weisen somit zunächst eine äußere in einer Längsrichtung verlaufende Struktur in Form der Schraubenlinie und zusätzlich eine innere Struktur auf. Diese innere Struktur, die in dem exemplarischen Beispiel der "Wendeltreppe" die einzelnen "Treppenstufen" bilden würde, umfaßt einzelne Graphitebenen, in denen das Druckgas, beispielsweise der Wasserstoff, gespeichert wird. Eine solche Struktur hat wegen ihrer vielen Kanten (edges) erhebliche Vorteile hinsichtlich der Speicherbe- und -entladung.

Eine weitere vorteilhafte Art der Carbon-Nanostrukturen ist röhrchenförmig aufgebaut, vorzugsweise mit einem Außendurchmesser von beispielsweise 35 nm und einem Innendurchmesser von beispielsweise 10 nm, so daß die Wanddicke in einer Größenordnung von etwa 10 nm liegt. Die innere Struktur der Fasern weist Graphitebenen auf, die fischgrätenartig angeordnet sind. Dabei können die Graphitebenen teilweise über den inneren Hohlraum hinweg mit der gegenüberliegenden Seite brückenartig verbunden sein.

Um eine vorteilhafte Speicherung von Druckgas zu erreichen, können die Carbon-Nanostrukturen aktiviert sein. Eine solche Aktivierung hat die Funktion, die Oberfläche der Carbon-Nanostrukturen so zu modifizieren, daß das Druckgas anschließend in den einzelnen Graphitebenen der inneren Struktur eingelagert werden kann. Die Einlagerung des Druckgases kann physikalisch oder chemisch in analoger Form wie bei Metallhydriden erfolgen. Die Aktivierung der Carbon-Nanostrukturen erfolgt vorteilhaft durch ein geeignetes Reaktionsgas.

Durch die Tatsache, daß die Carbon-Nanostrukturen eine gerichtete Struktur aufweisen, wird insbesondere bei faserartigen Carbon-Nanostrukturen erreicht, daß ein dichteres makroskopisches Gebilde erzielt wird. Insbesondere können durch eine geeignete Ordnung Zwischenräume zwischen den einzelnen Carbon-Nanostrukturen minimiert werden, wodurch sich insgesamt eine Erhöhung der Scheindichte der Carbon-Nanostrukturen ergibt. Durch eine Ordnung der Carbon-Nanostrukturen ist es weiterhin möglich, eine durch die Beladung mit Druckgas auftretende Expansion der Carbon-Nanostrukturen gezielt zu beherrschen. Während sich ungeordnete Fasern beispielsweise in drei Dimensionen ausdehnen, dehnen sich geordnete Fasern im wesentlichen nur in einer Dimension aus. Der Ausdehnung in nur einer Dimension kann jedoch durch entsprechendes Befüllen des Speicherbehälters mit den Carbon-Nanostrukturen auf einfache Weise Rechnung getragen werden.

In weiterer Ausgestaltung sind die Konglomerate durch zusätzliches Pressen der Carbon-Nanostrukturen gebildet. Die Verpressung gewährleistet eine mechanische Verkettung der Carbon-Nanostrukturen.

Vorteilhaft können die Konglomerate aus Carbon-Nanostrukturen als scheibenförmige Körper ausgebildet sein. Derartige scheibenförmige Körper lassen sich auf einfache Weise, beispielsweise durch Verpressen, herstellen. Weiterhin lassen sich die einzelnen Scheiben auf einfache Weise aufeinander stapeln, wobei praktisch das gesamte Speicherbehältervolumen ausgefüllt werden kann. Dadurch wird die spezifische Speicherkapazität der Speichervorrichtung weiter erhöht.

Je nach Bedarf ist es auch denkbar, daß die einzelnen scheibenartigen Körper durch geeignete Abstandhalter voneinander beabstandet sind. Die Abstandhalter können beispielsweise eine Höhe im µm-Bereich bis in den cm-Bereich aufweisen. Dadurch wird es möglich, daß das über die Zuleitung in den Speicherbehälter eingespeiste Druckgas, insbesondere der Wasserstoff, die als scheibenförmige Körper ausgebildeten Konglomerate aus Carbon-Nanostrukturen von allen Seiten umspülen kann, was zu einer verbesserten Speicherung des Druckgases in den Carbon-Nanostrukturen führt. Vorzugsweise können die scheibenförmigen Körper mit einer dem Querschnitt des Behälters entsprechenden Grundfläche ausgebildet sein. Natürlich kann, wie dies weiter unten noch näher beschrieben wird, die Grundfläche der scheibenförmigen Körper auch kleiner gewählt werden.

In weiterer Ausgestaltung können die Konglomerate in Form von Pellets ausgebildet sein. Vorzugsweise sind diese Pellets kugelförmig oder tablettenförmig ausgebildet, so daß sie beim Einfüllen in den Speicherbehälter ein gutes Fließverhalten haben. Die Herstellung der Pellets kann beispielsweise über ein geeignetes Stanzpreß- oder Strangpreßverfahren erfolgen. Vorteilhaft können Pellets unterschiedlicher Größe und/oder Geometrie verwendet werden. Dadurch wird eine besonders hohe Einfülldichte erzielt, da das verbleibende nicht von Festkörpern ausgefüllte Volumen innerhalb des Speicherbehälters minimal ist.

In weiterer Ausgestaltung können die Carbon-Nanostrukturen in einer im Innenraum des Speicherbehälters angeordneten Lagereinrichtung gelagert sein. Dabei weist die Lagereinrichtung vorzugsweise eine Anzahl von Fächem auf. Eine solche Lagereinrichtung hat den Vorteil, daß diese in einem separaten Arbeitsschritt zunächst auf einfache und kostengünstige Weise hergestellt werden kann. Weiterhin können die als Feststoffüllung dienenden Konglomerate aus Carbon-Nanostrukturen nach ihrer Herstellung auf einfache Weise in die Lagereinrichtung eingelagert werden. Dieses gesamte System aus Lagereinrichtung und Feststoffüllung kann dann als modulare Einheit ohne Schwierigkeiten in den Speicherbehälter der Speichervorrichtung eingebracht werden.

Vorteilhaft sind die Fächer der Lagereinrichtung durch in Längsrichtung des Speicherbehälters voneinander beabstandete Schottbleche gebildet Derartige Schottbleche weisen eine Reihe von Vorteilen auf. So verhindern sie zunächst eine Entmischung der Carbon-Nanostrukturen mit eventuell vorzunehmenden Beimischungen über die von zwei benachbarten Schottblechen begrenzten Fächer hinaus. Weiterhin verhindern die Schottbleche bei unfallbedingten Behälterbrüchen, daß mit dem Druckgas auch die Carbon-Nanostrukturen ungehindert mit ausgetragen werden können. Weiterhin können die Schottbleche in Verbindung mit den Konglomeraten aus Carbon-Nanostrukturen in Form formstabiler Pellets hergestellt werden, die dann auf einfache Weise in den Speicherbehälter eingebracht werden können. Die Schottbleche begünstigen weiterhin neben einer radial gerichteten Energiezu- bzw. -abfuhr einen axial gerichteten Energieaustausch. Schließlich erleichtern die Schottbleche, die aus einem gasleitenden und/oder gasoffenen Material hergestellt sein können, auch den Gastransport in radialer Richtung, da bei Entladevorgängen die an die Oberfläche der Schottbleche angrenzenden Carbon-Nanostrukturschichten vorrangig entladen bzw. beladen werden. Derartige Schottbleche sind für einen Metallhydridspeicher beispielsweise in der DE-A-31 25 276 beschrieben.

In weiterer Ausgestaltung können jeweils zwei benachbarte Schottbleche das Oberteil und das Unterteil einer geschlossenen Dose bilden. Vorzugsweise ist die Summe der Volumina der mit Carbon-Nanostrukturen verfüllten Dosen im Innenraum des Speicherbehälters vor der ersten Beladung mit Druckgas kleiner als das Nettoinnenvolumen des Speicherbehälters.

Die Dosen werden jeweils vollständig mit den Konglomeraten aus Carbon-Nanostrukturen gefüllt. Auf diese Weise enthält jede Dose die gleiche Menge an Carbon-Nanostrukturen. Da die Dosen außerdem verschlossen sind, ist eine sehr einfache und sichere Handhabung möglich. Die Dosen haben beispielsweise eine im wesentlichen flache zylindrische Form, so daß sie auf einfache Weise im Innenraum des Speicherbehälters gelagert werden können. Vorzugsweise weisen die Dosen einen zentralen Durchbruch auf, durch den beispielsweise ein Gasführungsrohr des Gasführungssystems hindurch geführt ist.

Vorteilhaft sind die Dosen so gestaltet, daß bei vollständiger Füllung des Speicherbehälters mit den Dosen das Volumen aller eingebrachten Dosen in der Summe kleiner ist als das Nettoinnenvolumen des Speicherbehälters selbst. Als Nettoinnenvolumen wird dabei das Innenvolumen des Speicherbehälters abzüglich des Volumens des Gasführungssystems und der wahlweise vorhandenen Heiz-/Kühleinrichtung verstanden. Die Volumendifferenz soll mindestens so groß sein, wie der spezifische Volumenzuwachs des Carbon-Nanostrukturmaterials nach mehrfachem Be- und Entladen gegenüber dem ursprünglich unbeladenen Zustand. Dadurch wird sichergestellt, daß sich das Carbon-Nanostrukturmaterial im beladenen Zustand ohne weiteres ausdehnen kann, ohne daß der Speicherbehälter beschädigt wird.

Vorzugsweise weisen das Dosenoberteil und das Dosenunterteil jeweils einen Innenmantel und einen Außenmantel auf, wobei sich die Innenmäntel und die Außenmäntel vor der ersten Beladung mit Druckgas zumindest bereichsweise übergreifen. Durch die Ausgestaltung der Dosen wird ermöglicht, daß sich diese auf Grund einer Ausdehnung des Carbon-Nanostrukturmaterials verformen können.
Dabei sind die Dosen vorteilhaft so gestaltet, daß sie auch im verformten Zustand die Carbon-Nanostrukturen in Scheibenform zwischen dem Dosenunterteil und dem Dosenoberteil eingeschlossen halten. Dadurch werden unkontrollierte Materialverlagerungen innerhalb des Speicherbehälters während des Betriebs vermieden. Die Dosenunterteile und -oberteile können während der Be- und Entladevorgänge als geeignete Wärmeleitbleche genutzt werden. Derartige Dosen sind in der EP-A-0 188 996 bereits im Zusammenhang mit Metallhydridspeichern beschrieben worden.

In weiterer Ausgestaltung können die Carbon-Nanostrukturen zur Bildung der Konglomerate und/oder die Konglomerate selbst in einer gasdurchlässigen Matrix eingebettet sein. Bei dem verwendeten Matrixmaterial handelt es sich vorzugsweise um gasoffene Kammer-, Poren- oder Einbettungssysteme. Denkbar ist beispielsweise eine Einbettung in ein Polymer, etwa in Styropor, das sowohl eine mikroskopische Bindung der Carbon-Nanostrukturen, als auch eine makroskopische Einlagerung in Styroporporen gewährleistet. Als Matrixmaterial können auch gasoffene Binder verwendet werden.

Vorteilhaft können die Konglomerate aus Carbon-Nanostrukturen eine Grundfläche oder einen Querschnitt aufweisen, der kleiner oder gleich dem Innenquerschnitt des Speicherbehälters ist. Dadurch kann je nach Wunsch eine optimale Füllung des Speicherbehälters mit Carbon-Nanostrukturmaterial gewährleistet werden. Insbesondere dann, wenn die Grundfläche oder der Querschnitt der Konglomerate aus Carbon-Nanostrukturen kleiner als der Innenquerschnitt des Speicherbehälters ist, ergibt sich zwischen der Behälterwand und der Feststoffüllung aus Carbon-Nanostrukturmaterial ein Spalt, der als Strömungskanal für das zu speichernde Druckgas oder aber für ein Heiz-/Kühlmedium verwendet werden kann. Hierzu kann beispielsweise eine Teilmenge des gespeicherten Gases in einem Kreislauf aus dem Behälter herausgeführt, in einem Wärmetauscher gekühlt oder erwärmt und dann wieder in den Behälter zurückgeführt werden.

In weiterer Ausgestaltung ist die Vorrichtung zum Messen des Füllstands als Meßvorrichtung zur Messung der kernmagnetischen Resonanz des im Speicherbehälter befindlichen Gases ausgebildet.

Dadurch wird die Möglichkeit geschaffen, daß der Füllstand des gespeicherten Mediums direkt gemessen werden kann. Außer der Art des gespeicherten Mediums und der Temperatur sind besondere zusätzliche Kenntnisse über weitere Werte und Daten des Mediums, wie Druck oder dessen Abfüllhistorie, nicht erforderlich.

Der Grundgedanke dieser Meßvorrichtung besteht darin, daß zur Bestimmung des Füllstands die kernmagnetische Resonanz [NMR-Resonanz (nuclear magnetic resonance)] des Druckgases gemessen wird. Hierbei wird von dem Prinzip Gebrauch gemacht, das einige Atomkerne, wie z. B. die von Wasserstoff, ein kernmagnetisches Moment (Kernspin) besitzen. Dieses steht in Wechselwirkung mit einem äußeren magnetischen Feld. Im Falle von Wasserstoff, der hier zum besseren Verständnis exemplarisch eingehender betrachtet wird, allerdings ohne die Erfindung auf Wasserstoff zu beschränken, kann sich das magnetische Moment durch das äußere magnetische Feld parallel oder antiparallel zu dem angelegten Magnetfeld einstellen. Die beiden Einstellungsmöglichkeiten sind energetisch unterschiedlich, so daß zwei verschiedene Energieniveaus existieren. Diese Energieniveaus sind im thermischen Gleichgewicht unterschiedlich besetzt. Das heißt, daß es im unteren Energieniveau mehr Kernspins als im oberen Energieniveau gibt. Die Mengenverteilung auf die beiden Energieniveaus ist lediglich von der Art des jeweiligen Mediums und von dessen Temperatur abhängig. Wird diesem System nun Energie in Form von elektromagnetischer Strahlung zugeführt, wobei die Menge an zugeführter Energie der Differenz der beiden Energieniveuas entspricht, werden Kemspins vom unteren in das obere Energieniveau befördert. Das Ergebnis läßt sich erfassen und im Hinblick auf die tatsächliche Befüllung des Speicherbehälters auswerten und übertragen.

Durch die Messung der kernmagnetischen Resonanz in einem von der Messung erfaßten Teilvolumen des Speicherbehälters wird es also möglich, mittels Extrapolation im Hinblick auf das Gesamtvolumen den Füllstand des im Speicherbehälter gespeicherten Druckgases über die tatsächlich vorherrschende Menge an darin befindlichen Atomkernen des Druckgases zu bestimmen. Es bedarf hierzu lediglich einer entsprechenden Eichung bzgl. des jeweils vorliegenden Speichervolumens, damit die ermittelten Meßwerte jeweils bestimmten Füllständen zugeordnet werden können.

Die Meßvorrichtung weist vorzugsweise einen Meßkopf auf, der ein bestimmtes Teilvolumen des Speicherbehälters erfaßt, das in gleicher Weise mit dem Druckgas und dem Carbon-Nanostrukturmaterial gefüllt ist wie die übrigen Bereiche des Speicherbehälters. In dem Meßkopf ist ein statisches Magnetfeld und ein elektromagnetisches Wechselfeld vorhanden, wobei die Feldlinien des statischen Magnetfelds und des elektromagnetischen Wechselfelds senkrecht aufeinander stehen. Durch das statische Magnetfeld werden die Kemspins auf ihre unterschiedlichen Energieniveaus eingestellt. Durch das elektromagnetische Wechselfeld, das in seiner Größe der Energiedifferenz zwischen den Energieniveaus entspricht, werden Kernspins vom unteren in das obere Energieniveau befördert. Die Energiedifferenz zwischen den Energieniveaus ist direkt proportional zum angelegten elektromagnetischen Wechselfeld. Je mehr Kemspins sich innerhalb des Meßkopfs befinden, desto mehr Energie kann absorbiert werden, so daß die absorbierte Energie auch direkt proportional zur Anzahl der Kemspins ist. Durch eine solche Meßvorrichtung wird somit als ein Parameter ein für die Energieaufnahme in Folge kernmagnetischer Resonanz repräsentativer Meßwert bestimmt und ausgewertet. Je höher der gemessene Wert ist, desto höher ist der Füllstand des im Speicherbehälter gespeicherten Druckgases. Durch entsprechende Eichung können für das gespeicherte Druckgas den einzelnen Meßwerten bezogen auf den vorliegenden Speicherbehälter bestimmte Füllstände zugeordnet werden.

In weiterer Ausgestaltung kann die Vorrichtung zum Messen des Füllstands als Meßvorrichtung zur Messung der Massenströme des Druckgases ausgebildet sein. Da insbesondere bei Verwendung der Speichervorrichtung als Treibstofftank in Verbindung mit Brennstoffzellen die Massen des Druckgases von Interesse sind, kann durch diese Meßvorrichtung der Massenstrom des Druckgases direkt gemessen werden, wodurch Fehler, die beispielsweise bei einer reinen Volumenstrommessung auftreten könnten, umgangen werden. Bei einer Messung des Volumenstroms spielen nämlich auch Größen wie Temperatur, Druck und Dichte eine Rolle.

Vorteilhaft kann die Meßvorrichtung zur Messung der Massenströme des Druckgases als Meßvorrichtung zur Messung der thermischen Energieübertragung bei einer Gasströmung ausgebildet sein. Derartige Meßvorrichtungen werden Anemometer genannt. Bei diesen Anemometern wird dem Druckgas Wärme zugeführt und der entsprechende Temperaturverlauf gemessen. Die Wärme wird von den vorbeiströmenden Gasmolekülen als Molekülschwingung aufgenommen. Deswegen ist die abtransportierte Wärme direkt proportional zur Anzahl der Gasmoleküle und somit proportional zur Masse. Alle System arbeiten thermoresistiv. Bei Einbringung der Anemometer in die Strömung des Druckgases sind Ansprechzeiten von kleiner 1 msec möglich. Dadurch wird eine genaue Messung des Massenstroms und damit durch Führung einer Massenbilanz auch die Bestimmung des Füllstands im Speicherbehälter möglich. Nachfolgend werden beispielhaft eine Reihe von unterschiedlichen Meßverfahren beschrieben, die auf dem anemometrischen Prinzip basieren. Es ist jedoch selbstverständlich, daß die Erfindung nicht auf die beschriebenen Beispiele beschränkt ist.

In einer Ausführungsform kann die Meßvorrichtung zur Messung der Massenströme als Kalorimeter ausgebildet sein. Bei einem solchen Kalorimeter wird ein Heizelement symmetrisch zwischen zwei Temperatursensoren angebracht. Wenn kein Gas strömt, bildet sich ein symmetrisches Temperaturprofil aus. Somit ist die Temperaturdifferenz zwischen den beiden Temperatursensoren null. Das Heizelement wird mit Strom versorgt, aber nachdem es die Solltemperatur erreicht hat und keine Wärme abgeführt wird, wird auch die Stromzufuhr auf Null gesetzt. Wenn ein Durchfluß an Druckgas vorhanden ist, wird die bereitgestellte Wärme vom strömenden Druckgas abgeführt und zwischen den beiden Temperatursensoren bildet sich eine Temperaturdifferenz aus. Mit der bekannten Größe der zugeführten Wärme, der Temperaturdifferenz und der Wärmekapazität läßt sich der Massenstrom beschreiben.

In anderer Ausgestaltung kann die Meßvorrichtung zur Messung der Massenströme als Heizdrahtanemometer ausgebildet sein. Das Grundprinzip des Heizdrahtanemometers beruht darauf, daß dem beheizten Draht durch das ihn umströmende Druckgas Wärme entzogen wird. Es kommt zur Abkühlung und somit zu einer Widerstandsänderung. Diese Widerstandsänderung ist proportional zur durchflossenen Mediumsmasse. Das Prinzip des Heizdrahtanemometers ist besonders geeignet für konstante und bekannte Mediumstemperaturen. Es ist deshalb besonders dann vorteilhaft anwendbar, wenn im Speicherbehälter der Speichervorrichtung noch ein gesonderter Temperatursensor vorhanden ist.

Ein weiteres Beispiel für eine geeignete Meßvorrichtung zur Messung der Massenströme ist beispielsweise ein sogenanntes Heißfilmanemometer. Hierbei umströmt das Druckgas zwei temperaturempfindliche Widerstände, die Teil einer Brückenschaltung sind. Auf Grund des gewählten Widerstandsverhältnisses wird der flußabwärts liegende Widerstand durch den Strom aufgeheizt. Der andere Widerstand nimmt die Gastemperatur an. Der Heizstrom wird durch eine elektrische Regelung so vorgegeben, daß sich eine konstante Temperaturdifferenz zwischen dem beheizten Widerstand und der Temperatur des Druckgases einstellt. Deswegen ist auch hier der elektrische Strom proportional zur vorbeiströmenden Masse.

In einer weiteren Ausführungsform werden zwei thermoresistive Widerstände mit dem Druckgas in Berührung gebracht. Beide werden geheizt. Einer dieser Widerstände wird umströmt, der andere befindet sich in einem nicht strömenden Bereich. Die Temperaturdifferenz wird für die Massenstrommessung herangezogen.

Weiterhin ist es auch denkbar, daß ein einziger thermoresistiver Widerstand für eine bestimmte Zeit geheizt und dann vom vorbeiströmenden Druckgas gekühlt wird. Die Abkühizeit kann dann als Maß für den Massenstrom herangezogen werden.

Vorteilhaft kann die Vorrichtung zum Messen des Füllstands im Innenraum des Speicherbehälters und/oder in der Nähe der Zuleitung und/oder Ableitung und/oder in der Zuleitung und/oder Ableitung selbst angeordnet sein. Die Anordnung der Vorrichtung zum Messen des Füllstands im Innenraum des Speicherbehälters ist dann von Vorteil, wenn die Füllstandsmessung mittels einer Meßvorrichtung zur Messung der kernmagnetischen Resonanz durchgeführt wird. Bei Verwendung einer Meßvorrichtung zur Messung der Massenströme des Druckgases wird diese vorzugsweise in der Zuleitung und/oder der Ableitung selbst oder aber in deren näherer Umgebung angeordnet.

In weiterer Ausgestaltung kann das Gasführungssystem ein oder mehrere Gasführungsrohre und/oder einen oder mehrere Kanäle aufweisen. Durch das Gasführungsrohr bzw. die Gasführungsrohre oder den Kanal oder die Kanäle wird das zu speichernde Druckgas von der Zuleitung in alle Bereiche des Innenraums des Speicherbehälters transportiert, so daß es möglichst gleichzeitig an vielen Stellen des Speicherbehälterinnenraums im Carbon-Nanostrukturmaterial gespeichert werden kann. Vorteilhaft kann das Gasführungssystem gasführende Strukturen aufweisen, die in die Oberflächen der Konglomerate aus Carbon-Nanostrukturen eingearbeitet sind und/oder die Konglomerate durchsetzen. Derartige Strukturen können beispielsweise vorstehende Stege sein, die als Abstandhalter zwischen den Konglomeraten dienen, oder auch eingearbeitete Nuten, durch die bevorzugt das Druckgas strömen kann. Weiterhin können die gasführenden Strukturen als durch die Konglomerate hindurchgehende Gebilde, beispielsweise als Löcher oder dergleichen, ausgebildet sein, die Strömungswege für das Gas darstellen. Wenn derartige Löcher koaxial hintereinander in den einzelnen Konglomeraten angeordnet sind, kann durch einen auf die Art und Weise geschaffenen Kanal zweckmäßigerweise auch ein Filterrohr für den Behälter eingeführt werden, das an die ventilbestückte Zu- und/oder Ableitung für das Gas angeschlossen ist. Die Nuten oder Kanäle können beispielsweise spiralförmig oder sternförmig angeordnet sein.

Vorzugsweise kann das Gasführungssystem zwischen den einzelnen Konglomeraten aus Carbon-Nanostrukturen und/oder zwischen diesen und der Wand des Speicherbehälters ausgebildet sein. Dadurch wird erreicht, daß die Carbon-Nanostrukturen von allen Seiten von dem zu speichernden Druckgas umspült werden, wodurch die Speicherzeit verkürzt und die spezifische Speicherkapazität weiter verbessert wird.

In weiterer Ausgestaltung kann der oder die Speicherbehälter mit einem Pufferspeicher für das Druckgas verbunden sein. Ein solcher Pufferspeicher enthält eine bestimmte Menge an Druckgas das für zeitlich begrenzte Zustände erhöhten Gasverbrauchs verwendet werden kann. Wenn die Speichervorrichtung beispielsweise in Verbindung mit einer Brennstoffzelle für ein Fahrzeug verwendet wird, kann das im Pufferspeicher befindliche Druckgas, insbesondere Wasserstoff, beispielsweise dann verwendet werden, wenn der von der Brennstoffzelle betriebene Motor des Fahrzeugs beschleunigt wird. In diesen Momenten ist eine zeitlich begrenzte erhöhte Menge an Druckgas erforderlich.

Vorteilhaft kann der Pufferspeicher mit der Heiz-/Kühleinrichtung verbunden sein. In diesem Fall kann das im Pufferspeicher befindliche Druckgas - sofern es nicht benötigt wird - auch zur Heizung bzw. Kühlung des Innenraums des Speicherbehälters verwendet werden. in diesem Falle wäre ein zusätzliches Heiz/Kühlmedium überflüssig.

Die vorstehend beschriebene erfindungsgemäße Speichervorrichtung kann vorteilhaft als Speichertank für Wasserstoff zum Betreiben einer Brennstoffzelle, insbesondere einer Brennstoffzelle zum Betreiben eines Motors für ein Fahrzeug, verwendet werden. Hier sind beispielsweise Anwendungen im Bereich von Personenkraftwagen oder aber auch im Bereich von Nutzfahrzeugen wie Bussen oder dergleichen denkbar. Natürlich ist die Erfindung nicht auf diese Art von Anwendungen beschränkt. So sind beispielsweise auch Anwendungen in der Computerindustrie denkbar. Insbesondere bei Laptops ist die Leitungskapazität der Akkus bisher nur auf wenige Stunden begrenzt. Diese Leistungsgrenze könnte durch den Einsatz von Brennstoffzellen in Verbindung mit einer wie vorstehend beschriebenen erfindungsgemäßen Speichervorrichtung enorm gesteigert werden. Dabei weist ein Brennstoffzellensystem für die Anwendung im Laptop prinzipiell keine Unterschiede zu größeren Systemen, beispielsweise in Bussen, auf. Der einzige Unterschied liegt in der Größe des Durchsatzes.

Die Erfindung wird nun auf exemplarische Weise an Hand von Ausführungsbeispielen unter Bezugnahme auf die beiliegende Zeichnung näher erläutert. Es zeigen:
- Fig. 1: in schematischer Querschnittsansicht eine erfindungsgemäße Vorrichtung zum Speichern von Druckgas,
- Fig. 2: in schematischer perspektivischer Ansicht als scheibenförmige Körper ausgebildete Konglomerate aus Carbon-Nanostrukturen,
- Fig. 3: in schematischer Querschnittsansicht einen Ausschnitt aus einem Speicherbehälter, in dem eine Lagereinrichtung vorgesehen ist,
- Fig. 4: in schematischer Querschnittsansicht den Ausschnitt eines Speicherbehälters, in dem eine andere Ausführungsform der Lageeinrichtung dargestellt ist, wobei der Zustand vor der ersten Beladung des Speicherbehälters mit Druckgas dargestellt ist und
- Fig. 5: in schematischer Querschnittsansicht einen Ausschnitt des Speicherbehälters gemäß Figur 4, wobei sich der Speicherbehälter in einem Zustand nach mehrmaliger Beladung und Entladung mit Druckgas befindet.

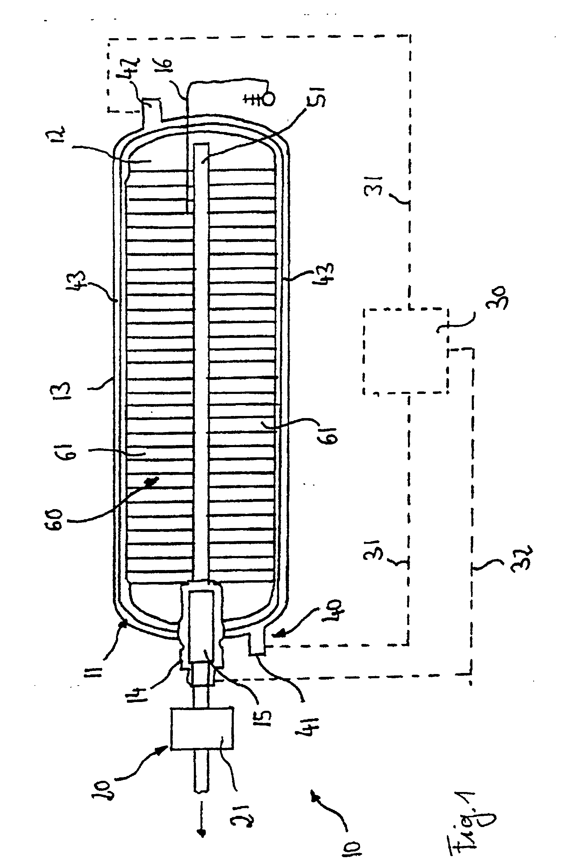

In der Figur 1 ist eine Vorrichtung 10 zum Speichern von Druckgas dargestellt, die einen geschlossenen Speicherbehälter 11 aufweist. Der Speicherbehälter 11 weist eine Behälterwand 13 auf, die-einen Innenraum 12 zur Aufnahme einer Feststoffüllung 60 begrenzt. Der Speicherbehälter 11 weist weiterhin eine Zu- und Ableitung 14 auf, über die er mit Druckgas beladen bzw. entladen werden kann. Um ein ungewolltes Austreten von Partikeln der Feststoffüllung 60 aus dem Speicherbehälter 11 zu verhindern, ist in der Zu- und Ableitung 14 ein als Mikrofilter ausgebildetes Filterelement 15 vorgesehen. Die Bestimmung der Temperatur im Innenraum 12 des Speicherbehälters 11 erfolgt über einen Temperatursensor 16.

Die Vorrichtung 10 zum Speichern von Druckgas weist weiterhin eine Heiz/Kühleinrichtung 40 auf, die aus einem Einlaßstutzen 41, einem Auslaßstutzen 42 und einem Kühlkanal 43 gebildet ist. Der Einlaßstutzen 41 und der Auslaßstutzen 42 sind in der Behälterwand 13 des Speicherbehälters 11 ausgebildet und mit einer nicht dargestellten Quelle für ein Heiz-/Kühlmedium verbunden. Als geeignetes Heiz/Kühlmedium kann beispielsweise Wasser dienen. Der Kühlkanal 43, der sich zwischen einer Außenwand und einer Innenwand der mehrwandig ausgebildeten Behälterwand 13 befindet und den Innenraum 12 mantelförmig umgibt, ist mit dem Einlaßstutzen 41 und dem Auslaßstutzen 42 verbunden, so daß das Heiz/Kühlmedium durch den Kühlkanal 43 hindurchströmt und somit zu einer Kühlung des Speicherbehälters 11 und dessen Innenraums 12 beiträgt.

Die im Innenraum 12 des Speicherbehälters 11 befindliche Feststoffüllung 60 besteht aus einer Anzahl von Konglomeraten 61 aus Carbon-Nanostrukturmaterial, wobei die Konglomerate eine gegenüber der Scheindichte der ursprünglich losen Teilchen der Carbon-Nanostrukturen erhöhte Scheindichte aufweisen. Die Carbon-Nanostrukturen sind vorzugsweise als Carbon-Nanofasern ausgebildet. Durch diese verdichteten Konglomerate 61 aus Carbon-Nanostrukturen wird die spezifische Speicherkapazität im Speicherbehälter 11 erhöht.

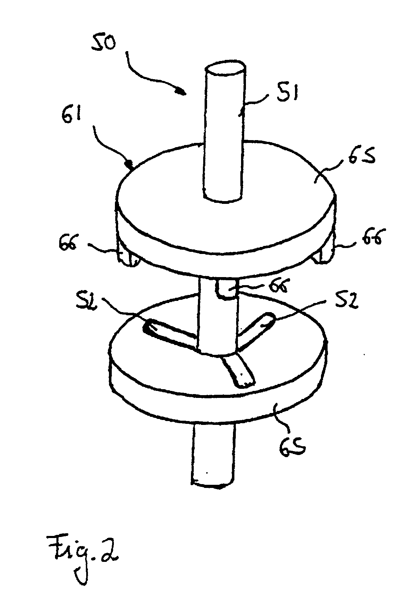

Die Konglomerate 61 aus Carbon-Nanostrukturen sind von einem Gasführungsrohr 51 durchsetzt, das Bestandteil eines Gasführungssystems 50 (Fig. 2) ist. Das Gasführungsrohr 51 ist mit der Zu- und Ableitung 14 verbunden. Über das Gaszuführungsrohr 51 wird das in den Speicherbehälter 11 einströmende Druckgas zu den einzelnen Konglomeraten 61 transportiert, so daß es in diesen gespeichert werden kann. Bei Entladung des Speicherbehälters 11 wird das gespeicherte Druckgas in umgekehrter Richtung über das Gasführungsrohr 51 zur Zu- und Ableitung 14 transportiert. Zu diesem Zweck sollte das Gaszuführungsrohr 51 mit geeigneten Öffnungen in seiner Wand versehen sein. Zweckmäßig ist es als Filterrohr ausgebildet, beispielsweise aus einem offenporigen Sintermetall.

Zur Messung des Füllstands des Druckgases im Speicherbehälter 11 ist eine Vorrichtung 20 zur Messung des Füllstands vorgesehen, die im vorliegenden Ausführungsbeispiel als Meßvorrichtung 21 zur Messung des Massenstroms von dem Druckgas ausgebildet ist. Die Meßvorrichtung 21 zur Messung des Massenstroms ist in nächster Umgebung zur Zu- und Ableitung 14 des Speicherbehälters angeordnet. Auf diese Weise können genaue Angaben über den Füllstand des Druckgases im Speicherbehälter gemacht werden.

Je nach Anwendungsfall, beispielsweise wenn die Vorrichtung 10 zum Speichern von Druckgas als Tankspeicher für Wasserstoff zum Betrieb einer Brennstoffzelle für den Motor eines Kraftfahrzeugs verwendet wird, kann es sinnvoll sein, zusätzlich einen Pufferspeicher 30 für zusätzliches Druckgas bereitzustellen. Da die Bereitstellung eines solchen Pufferspeichers 30 nicht zwingend benötigt wird, sind der Pufferspeicher 30 sowie die entsprechenden Leitungen in Figur 1 in gestrichelter Weise dargestellt. Der Pufferspeicher 30 ist über eine Leitung 32 mit der Zu- und Ableitung 14 verbunden. Auf diese Weise kann, beispielsweise wenn das über die Brennstoffzelle betriebene Fahrzeug beschleunigt, zusätzliches Druckgas während des Beschleunigungsvorgangs aus dem Pufferspeicher 30 zur Verfügung gestellt werden. Nach dem Ausführungsbeispiel gemäß Figur 1 ist der Pufferspeicher 30 weiterhin über Leitungen 31 mit dem Einlaßstutzen 41 und dem Auslaßstutzen 42 der Heiz-/Kühleinrichtung 40 verbunden. Auf diese Weise kann das im Pufferspeicher 30 befindliche Druckgas auch zur Heizung bzw. Kühlung des Speicherbehälters 11 bzw. der in diesem befindlichen Feststoffüllung 60 verwendet werden.

In Figur 2 ist eine weitere Ausführungsform der als Konglomerate 61 aus Carbon-Nanostrukturmaterial gebildeten Feststoffüllung 60 dargestellt. Dabei sind die Konglomerate 61 als scheibenförmige Körper 65 ausgebildet, die bei ihrer Herstellung einem Preßvorgang unterzogen wurden. Die scheibenförmigen Körper können - müssen jedoch nicht - über geeignete Abstandshalter 66 voneinander beabstandet angeordnet sein. Weiterhin können die scheibenförmigen Körper 65 gasführende Strukturen 52 aufweisen, die im unteren der beiden dargestellten scheibenförmigen Körper sternförmig ausgebildet sind. Die scheibenförmigen Körper 65 weisen weiterhin in ihrem Zentrum eine durchgehende Öffnung auf, durch die ein Gasführungsrohr 51 hindurch geführt ist.

Das Gasführungsrohr 51, die gasführenden Strukturen 52 sowie die Abstandhalter 66 sind Bestandteile des Gasführungssystems 50, über das das Druckgas mit der Feststoffüllung 60 aus Carbon-Nanostrukturmaterial in Verbindung gebracht wird. Durch die Abstandhalter 66 und die gasführenden Strukturen 52 wird erreicht, daß das Druckgas gleichzeitig und gleichmäßig in alle Bereiche der Feststoffüllung 60 geleitet wird, so daß eine gleichmäßige Speicherung des Druckgases im Speicherbehälter 11 erreicht wird. Der Durchmesser der scheibenförmigen Körper 65 kann kleiner oder gleich dem Innendurchmesser des Speicherbehälters 11 sein. Insbesondere wenn für die scheibenförmigen Körper 65 ein kleinerer Durchmesser gewählt wird, kann zwischen der Behälterwand 13 und dem Rand der scheibenförmigen Körper 65 ein weiterer Kanal geschaffen werden, über den das Druckgas zum Zwecke der Speicherung in die Feststoffüllung 60 transportiert werden kann.

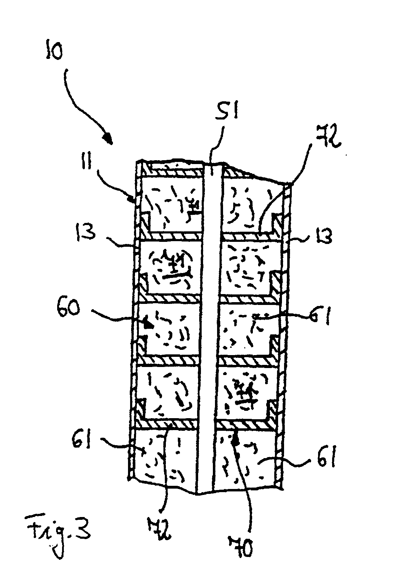

In Figur 3 ist eine weitere Ausführungsform der erfindungsgemäßen Vorrichtung 10 zum Speichern von Druckgas dargestellt. Dabei ist im Innenraum 12 des Speicherbehälters 11 eine Lagereinrichtung 70 vorgesehen, die eine Anzahl von Fächern 71 aufweist. Die Fächer 71 werden durch Schottbleche 72 gebildet, die in Längsrichtung des Speicherbehälters 11 beabstandet voneinander angeordnet sind. Die Schottbleche 72 weisen in ihrem Mittelbereich jeweils einen Durchbruch auf, durch den das Gasführungsrohr 51 geführt ist. Die einzelnen Fächer 71 sind mit der Feststoffüllung 60, die durch Konglomerate 61 von Carbon-Nanostrukturmaterial gebildet ist, verfüllt. Zum Beladen bzw. Entladen des Speicherbehälters 11 wird das Druckgas über das Gasführungsrohr 51 in den Innenraum 12 des Speicherbehälters 11 eingeleitet bzw. über dieses abgeleitet. Über eine entsprechende Gestaltung des Gasführungsrohres 51 z.B. als Filterrohr wird erreicht, daß das hineinströmende Druckgas jeweils in die einzelnen Fächer 71 hineinströmen kann und dort in den Carbon-Nanostrukturen gespeichert wird.

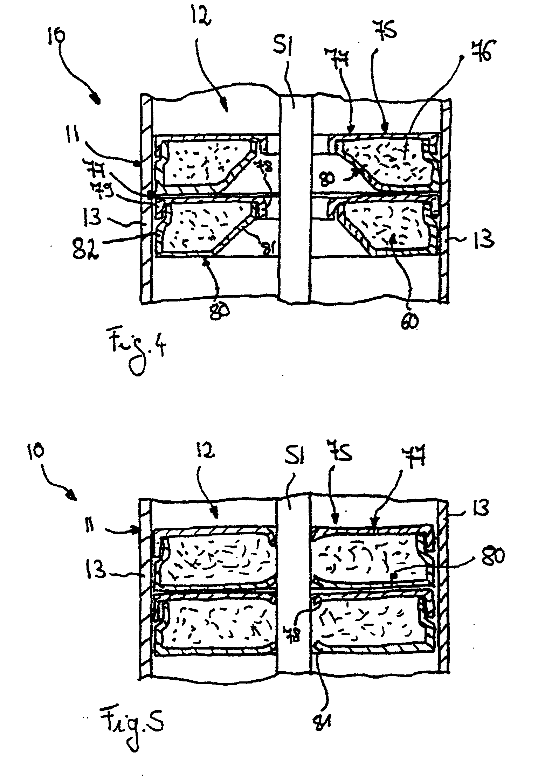

In den Figuren 4 und 5 ist noch ein weiteres Ausführungsbeispiel der Vorrichtung 10 zum Speichern von Druckgas dargestellt.

Wie insbesondere aus Figur 4 ersichtlich ist, ist innerhalb des Speicherbehälters 11 eine Lagereinrichtung 70 vorgesehen, die eine Anzahl von Dosen 75 aufweist. Die Dosen 75 bestehen jeweils aus einem Dosenoberteil 77 und einem Dosenunterteil 80. Das Dosenunterteil 80 weist einen Außenmantel 82 und einen Innenmantel 81 auf. Ebenso weist auch das Dosenoberteil 77 einen Innenmantel 78 und einen Außenmantel 79 auf. Der Außenmantel 79 und der Innenmantel 78 des Dosenoberteils 77 übergreifen jeweils den Außenmantel 82 und den Innenmantel 81 des Dosenunterteils 80. Der Innenmantel 81 des Dosenunterteils 80 weist einen kegelförmigen, oder besser als Kegelstumpf ausgebildeten Abschnitt auf. Durch diese Ausgestaltung der Dosen 75 wird erreicht, daß bei vollständiger Füllung des Speicherbehälters 11 mit den Dosen 75 das Volumen 76 aller eingebrachten Dosen 75 in der Summe kleiner ist als das Nettoinnenvolumen des Speicherbehälters 11. Dadurch wird sichergestellt, daß sich die Feststoffüllung 60 während des Belade- und Entladevorgangs mit Druckgas ausdehnen kann, ohne daß dies zu einer Beschädigung des Speicherbehälters 11 führt.

Wenn sich die aus Carbon-Nanostrukturmaterial bestehende Feststoffüllung 60 beim Beladen mit Druckgas ausdehnt, kommt es zu einer bleibenden Verformung des Dosenoberteils 77 und des Dosenunterteils 80. Diese Verformung ist in Figur 5 dargestellt. Man sieht, daß sich die in der Nähe des Gasführungsrohrs 51 liegenden Teile der Dosen 75 gestreckt haben und zur dichten Anlage an das Gasführungsrohr 51 gekommen sind. Es ist deutlich erkennbar, daß hierdurch sichergestellt wird, daß die scheibenförmig aufgeteilte Feststoffüllung 60 sich nicht unkontrolliert zwischen den einzelnen Scheiben verlagern kann. Dies ist eine wichtige Voraussetzung für die Verhinderung bleibender Verformungen an den Behälterwänden 13 des Speicherbehälters 11. Damit können die in Figur 4 und 5 dargestellten Dosen 75 zum einen als direkte Verpackung für die Feststoffüllung 60 sowie zum sicheren Transport der Feststoffüllung 60 verwendet werden. Weiterhin können die Dosen 75 auf einfache Weise in die Lagereinrichtung 70 eingefügt werden, wodurch ein schneller Einbau der Feststoffüllung 60 in den Speicherbehälter 11 ermöglicht wird.

### Bezugszeichenliste

- 10 =: Vorrichtung zum Speichern von Druckgas
- 11 =: Speicherbehälter
- 12 =: Innenraum
- 13 =: Behälterwand
- 14 =: Zu-/Ableitung
- 15 =: Filterelement
- 16 =: Temperatursensor

- 20 =: Vorrichtung zur Füllstandsmessung
- 21 =: Meßvorrichtung zum Messen des Massenstroms

- 30 =: Pufferspeicher
- 31 =: Leitung zur Kühleinrichtung
- 32 =: Leitung zur Zu-/Ableitung von Druckgas

- 40 =: Heiz-/Kühleinrichtung
- 41 =: Einlaßstutzen
- 42 =: Auslaßstutzen
- 43 =: Kühlkanal

- 50 =: Gasführungssystem
- 51 =: Gasführungsrohr
- 52 =: gasführende Struktur

- 60 =: Feststoffüllung
- 61 =: Konglomerat

- 65 =: scheibenförmiger Körper
- 66 =: Abstandhalter

- 70 =: Lagereinrichtung
- 71 =: Fach
- 72 =: Schottblech
- 75 =: Dose
- 76 =: Dosenvolume
- 77 =: Dosenoberteil
- 78 =: Innenmantel
- 79 =: Außenmantel

- 80 =: Dosenunterteil
- 81 =: Innenmantel
- 82 =: Außenmantel

## Patentansprüche

1. Vorrichtung zum Speichern von Druckgas, insbesondere Wasserstoff, mit wenigstens einem geschlossenen Speicherbehälter (11), der wenigstens eine Zu- und Ableitung (14) für das Druckgas und in seinem Innenraum (12) ein Gasführungssystem (50) aufweist, wobei das Gasführungssystem (50) mit der Zu- und Ableitung (14) für das Druckgas verbunden ist, und bei dem im Innenraum (12) eine Feststoffüllung (60) zum Speichern des Druckgases vorgesehen ist,
**dadurch gekennzeichnet,**
**daß** die Feststoffüllung (60) eine Füllung aus Carbon-Nanostrukturen ist, daß die Carbon-Nanostrukturen zu größeren zusammenhängenden Konglomeraten (61) mit zumindest teilweise gegenüber der ursprünglichen Scheindichte der Carbon-Nanostrukturen erhöhter Scheindichte verbunden sind und daß wenigstens eine Vorrichtung (20) zum Messen des Füllstandes des Druckgases im Speicherbehälter (11) vorgesehen ist.

2. Vorrichtung nach Anspruch 1,
**dadurch gekennzeichnet,**
**daß** zwei oder mehr Speicherbehälter (11) vorgesehen sind.

3. Vorrichtung nach Anspruch 1 oder 2,
**dadurch gekennzeichnet,**
**daß** der Speicherbehälter (11) als Druckbehälter, insbesondere als Druckbehälter zum Speichern von Gasen mit einem Druck von bis zu 150 bar, ausgebildet ist.

4. Vorrichtung nach einem der Ansprüche 1 bis 3,
**dadurch gekennzeichnet,**
**daß** die Zuleitung und die Ableitung für das Druckgas separat voneinander ausgebildet sind.

5. Vorrichtung nach einem der Ansprüche 1 bis 4,
**dadurch gekennzeichnet,**
**daß** in der Zuleitung und/oder der Ableitung (14) für das Druckgas wenigstens ein Filterelement (15), vorzugsweise ein Mikrofilter, vorgesehen ist.

6. Vorrichtung nach einem der Ansprüche 1 bis 5,
**dadurch gekennzeichnet,**
**daß** eine Heiz-/Kühleinrichtung (40) für den Innenraum (12) des Speicherbehälters (11) vorgesehen ist.

7. Vorrichtung nach Anspruch 6,
**dadurch gekennzeichnet,**
**daß** die Heiz-/Kühleinrichtung (40) einen in der Wand (13) des Speicherbehälters (11) ausgebildeten Einlaßstutzen (41) und/oder Auslaßstutzen (42) für ein Heiz/Kühlmedium aufweist, daß wenigstens ein Kanal (43) oder eine Leitung für das Heiz-/Kühlmedium vorgesehen ist und daß der Kanal (43) oder die Leitung mit dem Einlaßstutzen (41) und/oder dem Auslaßstutzen (42) verbunden ist.

8. Vorrichtung nach einem der Ansprüche 1 bis 7,
**dadurch gekennzeichnet,**
**daß** der Speicherbehälter (11) mehrwandig mit einem Heiz/Kühlmantel ausgeführt ist.

9. Vorrichtung nach einem der Ansprüche 1 bis 8,
**dadurch gekennzeichnet,**
**daß** wenigstens ein Temperatursensor (16) zur Messung der im Innenraum (12) des Speicherbehälters (11) herrschenden Temperatur vorgesehen ist und der Temperatursensor (16) vorzugsweise innerhalb der Feststoffüllung (60) angeordnet ist.

10. Vorrichtung nach einem der Ansprüche 1 bis 9,
**dadurch gekennzeichnet,**
**daß** die Carbon-Nanostrukturen aus Nanofasern und/oder Nanoröhrchen und/oder Nanoschuppen gebildet sind.

11. Vorrichtung nach einem der Ansprüche 1 bis 10,
**dadurch gekennzeichnet,**
**daß** die Carbon-Nanostrukturen gerichtete Strukturen aufweisen.

12. Vorrichtung nach einem der Ansprüche 1 bis 11,
**dadurch gekennzeichnet,**
**daß** die Konglomerate (61) durch Pressen der Carbon-Nanostrukturen gebildet sind.

13. Vorrichtung nach einem der Ansprüche 1 bis 12,
**dadurch gekennzeichnet,**
**daß** die Konglomerate (61) aus Carbon-Nanostrukturen als scheibenförmige Körper (65) ausgebildet sind.

14. Vorrichtung nach einem der Ansprüche 1 bis 12,
**dadurch gekennzeichnet,**
**daß** die Konglomerate (61) in Form von Pellets ausgebildet sind und daß die Pellets insbesondere tablettenförmig oder kugelförmig ausgebildet sind.

15. Vorrichtung nach einem der Ansprüche 1 bis 14,
**dadurch gekennzeichnet,**
**daß** die Carbon-Nanostrukturen in einer im Innenraum (12) des Speicherbehälters (11) angeordneten Lagereinrichtung (70) gelagert sind und daß die Lagereinrichtung (70) eine Anzahl von Fächern (71) aufweist.

16. Vorrichtung nach Anspruch 15,
**dadurch gekennzeichnet,**
**daß** die Fächer (71) der Lagereinrichtung (70) durch in Längsrichtung des Speicherbehälters (11) voneinander beabstandete Schottbleche (72) gebildet sind.

17. Vorrichtung nach Anspruch 16,
**dadurch gekennzeichnet,**
**daß** jeweils zwei benachbarte Schottbleche (72) das Oberteil (77) und das Unterteil (80) einer geschlossenen Dose (75) bilden und daß die Summe der Volumina (76) der mit Carbon-Nanostrukturen verfüllten Dosen (75) im Innenraum (12) des Speicherbehälters (11) vor der ersten Beladung mit Druckgas kleiner ist als das Nettoinnenvolumen des Speicherbehälters (11).

18. Vorrichtung nach Anspruch 17,
**dadurch gekennzeichnet,**
**daß** das Dosenoberteil (77) und das Dosenunterteil (80) jeweils einen Innenmantel (78; 81) und einen Außenmantel (79; 82) aufweisen und daß sich der Innenmantel (78; 81) und der Außenmantel (79; 82) vor der ersten Beladung mit Druckgas zumindest bereichsweise übergreifen.

19. Vorrichtung nach einem der Ansprüche 1 bis 18,
**dadurch gekennzeichnet,**
**daß** die Carbon-Nanostrukturen zur Bildung der Konglomerate (61) und/oder die Konglomerate (61) selbst in einer gasdurchlässigen Matrix eingebettet sind.

20. Vorrichtung nach einem der Ansprüche 1 bis 19,
**dadurch gekennzeichnet,**
**daß** die Konglomerate aus Carbon-Nanostrukturen eine Grundfläche oder einen Querschnitt aufweisen, der kleiner oder gleich dem Innenquerschnitt des Speicherbehälters (11) ist.

21. Vorrichtung nach einem der Ansprüche 1 bis 20,
**dadurch gekennzeichnet,**
**daß** die Vorrichtung (20) zum Messen des Füllstands als Meßvorrichtung zur Messung der kernmagnetischen Resonanz des im Speicherbehälter (11) befindlichen Gases (60) ausgebildet ist.

22. Vorrichtung nach einem der Ansprüche 1 bis 20,
**dadurch gekennzeichnet,**
**daß** die Vorrichtung (20) zum Messen des Füllstands als Meßvorrichtung (21) zur Messung der Massenströme des Druckgases ausgebildet ist.

23. Vorrichtung nach Anspruch 22,
**dadurch gekennzeichnet,**
**daß** die Meßvorrichtung (21) zur Messung der Massenströme des Druckgases als Meßvorrichtung zur Messung von thermischer Energieübertragung ausgebildet ist.

24. Vorrichtung nach einem der Ansprüche 1 bis 23,
**dadurch gekennzeichnet,**
**daß** die Vorrichtung (20) zum Messen des Füllstands im Innenraum (12) des Speicherbehälters (11) und/oder in der Nähe der Zuleitung und/oder Ableitung (14) und/oder in der Zuleitung und/oder Ableitung (14) selbst angeordnet ist.

25. Vorrichtung nach einem der Ansprüche 1 bis 24,
**dadurch gekennzeichnet,**
**daß** das Gasführungssystem (50) ein oder mehrere Gasführungsrohre (51) und/oder einen Kanal oder mehrere Kanäle aufweist.

26. Vorrichtung nach Anspruch 25,
**dadurch gekennzeichnet,**
**daß** das Gasführungsrohr (51) als Filterrohr, insbesondere aus einem offenporig gesinterten Metall, ausgebildet ist.

27. Vorrichtung nach einem der Ansprüche 1 bis 26,
**dadurch gekennzeichnet,**
**daß** das Gasführungssystem (50) gasführende Strukturen (52) aufweist, die in die Oberfläche der Konglomerate (61) aus Carbon-Nanostrukturen eingearbeitet sind und/oder die Konglomerate (61) durchsetzen.

28. Vorrichtung nach einem der Ansprüche 1 bis 27,
**dadurch gekennzeichnet,**
**daß** das Gasführungssystem (50) zwischen den einzelnen Konglomeraten (61) aus Carbon-Nanostrukturen und/oder zwischen diesen und der Wand (13) des Speicherbehälters (14) ausgebildet ist.

29. Vorrichtung nach einem der Ansprüche 1 bis 28,
**dadurch gekennzeichnet,**
**daß** der oder die Speicherbehälter (11) mit wenigstens einem Pufferspeicher (30) für das Druckgas verbunden ist/sind.

30. Vorrichtung nach Anspruch 29,
**dadurch gekennzeichnet,**
**daß** der Pufferspeicher (30) mit der Heiz-/Kühleinrichtung (40) verbunden ist.

31. Verwendung einer Vorrichtung nach einem der Ansprüche 1 bis 30
als Speichertank für Wasserstoff zum Betreiben einer Brennstoffzelle, insbesondere einer Brennstoffzelle zum Betreiben eines Motors für ein Fahrzeug.

## Claims

1. Apparatus for storing pressurised gas, particularly hydrogen, having at least one closed storage container (11) which comprises at least one inlet and outlet (14) for the pressurised gas and has in its interior (12) a gas conveying system (50), the gas conveying system (50) being connected to the inlet and outlet (14) for the pressurised gas, and wherein a solid filling (60) for storing the pressurised gas is provided in the interior (12), **characterised in that** the solid filling (60) is a filling of carbon nanostructures, **in that** the carbon nanostructures are combined to form larger cohesive conglomerates (61) with an apparent density which is at least partly higher than the original apparent density of the carbon nanostructures, and **in that** at least one apparatus (20) is provided for measuring the fullness level of the pressurised gas in the storage container (11).

2. Apparatus according to claim 1, **characterised in that** two or more storage containers (11) are provided.

3. Apparatus according to claim 1 or 2, **characterised in that** the storage container (11) is constructed as a pressurised container, particularly as a pressurised container for storing gases with a pressure of up to 150 bar.

4. Apparatus according to one of claims 1 to 3, **characterised in that** the inlet and outlet for the pressurised gas are constructed to be separate from one another.

5. Apparatus according to one of claims 1 to 4, **characterised in that** at least one filter element (15), preferably a microfilter, is provided in the inlet and/or outlet (14) for the pressurised gas.

6. Apparatus according to one of claims 1 to 5, **characterised in that** a heater/cooler (40) is provided for the interior (12) of the storage container (11).

7. Apparatus according to claim 6, **characterised in that** the heater/cooler (40) has an inlet connection (41) and/or outlet connection (42) for a heating/cooling medium formed in the wall (13) of the storage container (11), **in that** at least one channel (43) or a line is provided for the heating/cooling medium and **in that** the channel (43) or the line is connected to the inlet connection (41) and/or outlet connection (42).

8. Apparatus according to one of claims 1 to 7, **characterised in that** the storage container (11) is of multi-walled construction with a heating/cooling jacket.

9. Apparatus according to one of claims 1 to 8, **characterised in that** at least one temperature sensor (16) is provided for measuring the temperature prevailing in the interior (12) of the storage container (11) and the temperature sensor (16) is preferably mounted inside the solid filling (60).

10. Apparatus according to one of claims 1 to 9, **characterised in that** the carbon nanostructures are formed from nano-fibres and/or nano-tubes and/or nano-flakes.

11. Apparatus according to one of claims 1 to 10, **characterised in that** the carbon nanostructures have directed structures.

12. Apparatus according to one of claims 1 to 11, **characterised in that** the conglomerates (61) are formed by compressing the carbon nanostructures.

13. Apparatus according to one of claims 1 to 12, **characterised in that** the conglomerates (61) are formed from carbon nanostructures in the form of disc-shaped elements (65).

14. Apparatus according to one of claims 1 to 12, **characterised in that** the conglomerates (61) are formed in the shape of pellets and the pellets are, in particular, tablet-shaped or spherical.

15. Apparatus according to one of claims 1 to 14, **characterised in that** the carbon nanostructures are stored in a storage means (70) disposed in the interior (12) of the storage container (11) and **in that** the storage means (70) comprise a plurality of compartments (71).

16. Apparatus according to claim 15, **characterised in that** the compartments (71) of the storage means (70) are formed by separating plates (72) spaced from one another in the longitudinal direction of the storage container (11).

17. Apparatus according to claim 16, **characterised in that** two adjacent separating plates (72) form the upper part (77) and lower part (80) of a closed box (75) and **in that** the sum of the volumes (76) of the boxes (75) filled with carbon nanostructures in the interior (12) of the storage container (11) before the first charging with pressurised gas is less than the nett internal volume of the storage container (11).

18. Apparatus according to claim 17, **characterised in that** the upper part (77) of the box and the lower part (80) of the box each have an inner jacket (78; 81) and an outer jacket (79; 82) and **in that** the inner jacket (78; 81) and the outer jacket (79; 82) overlap with each other at least in parts before the first charging with pressurised gas.

19. Apparatus according to one of claims 1 to 18, **characterised in that** the carbon nanostructures for forming the conglomerates (61) and/or the conglomerates (61) themselves are embedded in a gas-permeable matrix.

20. Apparatus according to one of claims 1 to 19, **characterised in that** the conglomerates of carbon nanostructures have a base surface or a cross section which is less than or equal to the internal cross section of the storage container (11).

21. Apparatus according to one of claims 1 to 20, **characterised in that** the apparatus (20) for measuring the fullness level is constructed as a measuring device for measuring the nuclear magnetic resonance of the gas (60) contained in the storage container (11).

22. Apparatus according to one of claims 1 to 20, **characterised in that** the apparatus (20) for measuring the fullness level is constructed as a measuring device (21) for measuring the mass flows of the pressurised gas.

23. Apparatus according to claim 22, **characterised in that** the measuring device (21) for measuring the mass flows of the pressurised gas is constructed as a measuring device for measuring thermal energy transfer.

24. Apparatus according to one of claims 1 to 23, **characterised in that** the apparatus (20) for measuring the fullness level is itself disposed in the interior (12) of the storage container (11) and/or near the inlet and/or outlet (14) and/or in the inlet and/or outlet (14).

25. Apparatus according to one of claims 1 to 24, **characterised in that** the gas conveying system (50) comprises one or more gas conveying pipes (51) and/or a channel or a plurality of channels.

26. Apparatus according to claim 25, **characterised in that** the gas conveying pipe (51) is constructed as a filter tube, more particularly of an open-pored sintered metal.

27. Apparatus according to one of claims 1 to 26, **characterised in that** the gas conveying system (50) comprises gas conveying structures (52) which are incorporated in the surface of the conglomerates (61) of carbon nanostructures and/or run through the conglomerates (61).

28. Apparatus according to one of claims 1 to 27, **characterised in that** the gas conveying system (50) is formed between the individual conglomerates (61) of carbon nanostructures and/or is formed between the latter and the wall (13) of the storage container (14).

29. Apparatus according to one of claims 1 to 28, **characterised in that** the storage container or containers (11) is/are connected to at least one buffer store (30) for the pressurised gas.

30. Apparatus according to claim 29, **characterised in that** the buffer store (30) is connected to the heater/cooler (40).

31. Use of an apparatus according to one of claims 1 to 30 as a storage tank for hydrogen for operating a fuel cell, particularly a fuel cell for driving a motor for a vehicle.

## Revendications

1. Dispositif de stockage d'un gaz comprimé notamment d'hydrogène comprenant au moins un réservoir (11), fermé ayant au moins une conduite d'alimentation et une conduite d'évacuation (14) pour le gaz comprimé et un système de guidage de gaz (50) dans le volume intérieur (12) du réservoir, le système de guidage de gaz (50) étant relié à la conduite d'alimentation et à la conduite d'évacuation (14) du gaz comprimé avec dans le volume intérieur (12) un remplissage de matière solide (60) prévu pour stocker le gaz comprimé,
**caractérisé en ce que**
le remplissage de matière solide (60) est un remplissage formé de nanostructures de carbone réunies pour former des conglomérats (61) cohérents, plus grands, avec au moins en partie vis-à-vis de la densité apparente initiale des nanostructures de carbone, une densité apparente plus élevée, et
au moins un dispositif (20) est prévu pour mesurer le niveau de remplissage du gaz comprimé dans le réservoir (11).

2. Dispositif selon la revendication 1,
**caractérisé par**
deux ou plusieurs réservoirs (11).

3. Dispositif selon la revendication 1 ou 2,
**caractérisé en ce que**
le réservoir (11) est un réservoir sous pression notamment un réservoir sous pression pour stocker des gaz à une pression allant jusqu'à 150 bars.

4. Dispositif selon l'une des revendications 1 à 3,
**caractérisé en ce que**
la conduite d'alimentation et la conduite d'évacuation du gaz comprimé sont réalisées séparément l'une de l'autre.

5. Dispositif selon l'une des revendications 1 à 4,
**caractérisé en ce que**
la conduite d'alimentation et/ou la conduite d'évacuation (14) du gaz comprimé comporte au moins un élément de filtre (15) de préférence un micro-filtre.

6. Dispositif selon l'une des revendications 1 à 5,
**caractérisé par**
une installation de chauffage/refroidissement (40) pour le volume intérieur (12) du réservoir (11).

7. Dispositif selon la revendication 6,
**caractérisé en ce que**
l'installation de chauffage/refroidissement (40) comporte un ajutage d'entrée (41) réalisé dans la paroi (13) du réservoir (11) et/ou un ajutage de sortie (42) pour le fluide de chauffage/refroidissement, et au moins un canal (43) ou une conduite est prévu pour le fluide de chauffage/refroidissement, le canal (43) ou la conduite étant relié à l'ajutage d'entrée (41) et/ou l'ajutage de sortie (42).

8. Dispositif selon l'une des revendications 1 à 7,
**caractérisé en ce que**
le réservoir (11) est un réservoir à plusieurs parois avec une chemise de chauffage/refroidissement.

9. Dispositif selon l'une des revendications 1 à 8,
**caractérisé par**
au moins un capteur de température (16) pour mesurer la température régnant dans le volume intérieur (12) du réservoir (11), le capteur de température (16) étant prévu de préférence à l'intérieur de la charge de matière solide (60).

10. Dispositif selon l'une des revendications 1 à 9,
**caractérisé en ce que**
les nanostructures de carbone sont formées de nanofibres et/ou de nanotubes et/ou de nanoplaquettes.

11. Dispositif selon l'une des revendications 1 à 10,
**caractérisé en ce que**
les nanostructures de carbone sont des structures orientées.

12. Dispositif selon l'une des revendications 1 à 11,
**caractérisé en ce que**
les conglomérats (61) sont obtenus par compression des nanostructures de carbone.

13. Dispositif selon l'une des revendications 1 à 12,
**caractérisé en ce que**
les conglomérats (61) sont formés de nanostructures de carbone comme corps (65) en forme de rondelle.

14. Dispositif selon l'une des revendications 1 à 12,
**caractérisé en ce que**
les conglomérats (61) sont réalisés sous forme de boulettes et les boulettes sont en forme de tablette ou de sphère.

15. Dispositif selon l'une des revendications 1 à 14,
**caractérisé en ce que**
les nanostructures de carbone sont placées dans une installation de stockage (70) dans la cavité (12) du réservoir (11) et l'installation de stockage (70) présente un certain nombre de compartiments (71).

16. Dispositif selon la revendication 15,
**caractérisé en ce que**
les compartiments (71) de l'installation de stockage (70) sont formés par des tôles de retenue (72) réparties écartées dans la direction longitudinale du réservoir (11).

17. Dispositif selon la revendication 16,
**caractérisé en ce que**
chaque fois deux tôles de retenue (72) voisines forment la partie supérieure (77) et la partie inférieure (80) d'une boite fermée (71) et la somme des volumes (76) des boîtes (75) remplies de nanostructures de carbone dans le volume intérieur (12) du réservoir (11) est avant le premier remplissage de gaz comprimé inférieure au volume intérieur net du réservoir (11).

18. Dispositif selon la revendication 17,
**caractérisé en ce que**
la partie supérieure (77) et la partie inférieure (80) d'une boîte comportent respectivement une enveloppe intérieure (78, 81) et une enveloppe extérieure (79, 82), et l'enveloppe intérieure (78, 81) et l'enveloppe extérieure (79, 82) se chevauchent au moins par zone avant le premier remplissage avec du gaz comprimé.

19. Dispositif selon l'une des revendications 1 à 18,
**caractérisé en ce que**
les nanostructures de carbone sont intégrées pour former les conglomérats (61) et/ou les conglomérats (61) sont intégrés eux-mémes dans une matrice perméable au gaz.

20. Dispositif selon l'une des revendications 1 à 19,
**caractérisé en ce que**
les conglomérats de nanostructure en carbone ont une surface de base ou une section inférieure ou égale à la section intérieure du réservoir (11).

21. Dispositif selon l'une des revendications 1 à 20,
**caractérisé en ce que**
le dispositif (20) pour mesurer le niveau de remplissage est réalisé comme dispositif de mesure de la résonance du noyau magnétique des gaz (60) contenus dans le réservoir (11).

22. Dispositif selon l'une des revendications 1 à 20,
**caractérisé en ce que**
le dispositif (20) pour mesurer le niveau de remplissage est un dispositif de mesure (21) pour mesurer le débit massique de gaz comprimé.

23. Dispositif selon la revendication 22,
**caractérisé en ce que**
le dispositif de mesure (21) est formé pour mesurer le débit massique de gaz comprimé comme dispositif de mesure pour mesurer le transfert d'énergie thermique.

24. Dispositif selon l'une des revendications 1 à 23,
**caractérisé en ce que**
le dispositif (20) pour mesurer le niveau de remplissage est lui-même prévu dans le volume intérieur (12) du réservoir (11) et/ou à proximité de la conduite d'alimentation et/ou de la conduite d'évacuation (14) et/ou de la conduite d'alimentation et/ou de la conduite d'évacuation (14).

25. Dispositif selon l'une des revendications 1 à 24,
**caractérisé en ce que**
le système d'alimentation en gaz (50) comporte un ou plusieurs tubes de guidage de gaz (51) et/ou un canal ou plusieurs canaux.

26. Dispositif selon la revendication 25,
**caractérisé en ce que**
le tube de remplissage de gaz (51) est réalisé comme tube de filtre notamment en une matière frittée à pores ouverts.

27. Dispositif selon l'une des revendications 1 à 26,
**caractérisé en ce que**
le système de guidage de gaz (50) comporte des structures de guidage de gaz (52) qui sont usinées dans la surface du conglomérat (61) formé de nanostructures de carbone et/ou traversant les conglomérats (61).

28. Dispositif selon l'une des revendications 1 à 27,
**caractérisé en ce que**
le système de guidage de gaz (50) est réalisé entre les différents conglomérats (61) de nanostructure de carbone et/ou entre celle-ci et la paroi (13) du réservoir (14).

29. Dispositif selon l'une des revendications 1 à 28,
**caractérisé en ce que**
le ou les réservoirs (11) sont reliés à au moins un réservoir tampon (30) pour le gaz comprimé.

30. Dispositif selon la revendication 29,
**caractérisé en ce que**
le réservoir tampon (30) est relié à une installation de chauffage/refroidissement (40).

31. Application d'un dispositif selon l'une des revendications 1 à 30,
comme réservoir d'hydrogène pour alimenter une pile à combustible, notamment une pile à combustible entrainant un moteur de véhicule.
